# EUROPEAN PATENT SPECIFICATION

(11) **EP 2 987 977 B1**
(45) Date of publication and mention of the grant of the patent: **12.10.2016**
(21) Application number: 15174858.9
(22) Date of filing: 01.07.2015
(51) Int. Cl.: F01N 3/08, F01N 3/025, F01N 9/00

(54) **CONTROL SYSTEM AND CONTROL METHOD OF INTERNAL COMBUSTION ENGINE**
STEUERUNGSSYSTEM UND STEUERUNGSVERFAHREN FÜR EINEN VERBRENNUNGSMOTOR
SYSTÈME DE COMMANDE ET PROCÉDÉ DE COMMANDE D'UN MOTEUR À COMBUSTION INTERNE

(30) Priority: 19.08.2014 JP 2014166727
(43) Date of publication of application: 24.02.2016
(73) Proprietor: TOYOTA JIDOSHA KABUSHIKI KAISHA, Toyota-shi, Aichi-ken, 471-8571 (JP)
(72) Inventor: BISAIJI, Yuki, Toyota-shi, Aichi-ken, 471-8571 (JP)
(74) Representative: Kuhnen & Wacker

(56) References cited:
- EP-A1- 2 511 493
- EP-A2- 0 733 786
- EP-A2- 1 176 289
- WO-A1-2013/121520
- US-A1- 2005 076 635

## Description

### Technical Field

The present invention relates to a control system and control method of an internal combustion engine.

### Background Art

Known in the art is an internal combustion engine which arranges an exhaust purification catalyst in an engine exhaust passage, arranges a hydrocarbon feed valve upstream of the exhaust purification catalyst in the engine exhaust passage, has a precious metal catalyst carried on an exhaust gas flow surface of the exhaust purification catalyst and is formed with a basic layer around the precious metal catalyst, and injects hydrocarbons from the hydrocarbon feed valve within a predetermined range of period so as to generate a reducing intermediate and uses the reducing intermediate which is generated to reduce the NOx which is contained in the exhaust gas (for example, see PTL 1). In this internal combustion engine, the hydrocarbons which are required for reducing the NOx contained in the exhaust gas are periodically injected from the hydrocarbon feed valve, but control of the period of injection of the hydrocarbons has not been particularly considered.

Further, Patent Literature 2 discloses an exhaust purification device for an internal combustion engine, equipped with a hydrocarbon supply valve and an exhaust purification catalyst that causes NOₓ and modified hydrocarbons contained in the exhaust gas to react with each other. The exhaust purification catalyst has a property whereby the NOₓ is reduced when the concentration of hydrocarbons flowing into the exhaust purification catalyst is oscillated with an amplitude within a predetermined range and a period within a predetermined range, and has a property whereby the amount of NOₓ that is adsorbed increases when the period of oscillation of the hydrocarbon concentration exceeds a predetermined range. The exhaust purification catalyst has a partition wall part that traps particulate matter. A noble metal catalyst and a basic part are arranged on a coating part formed on the surface of the partition wall part, and the oxidation capacity of the coating part of the inflow-side passage is higher than the oxidation capacity of the coating part of the outflow-side passage.

Patent Literature 3 describes that in an internal combustion engine, inside of an engine exhaust passage, a hydrocarbon feed valve and an exhaust purification catalyst are arranged. The exhaust purification catalyst is comprised of an upstream-side catalyst and a downstream-side catalyst arranged in series. The upstream-side catalyst is a three-way catalyst which has an oxygen storage ability. On the exhaust gas flow surface of the downstream side catalyst, precious metal catalysts are carried. Further, around the precious metal catalysts, a basic exhaust gas flow surface part is formed. The concentration of hydrocarbons which flow into the upstream-side catalyst is made to vibrate by within a predetermined range of amplitude of a 200 ppm or more and within a predetermined range of period of 5 seconds or less, whereby the NOₓ which is contained in exhaust gas is reduced at the exhaust purification catalyst.

### Citation List

### Patent Literature

PTL 1: WO 2011/114501A1
PTL 2: WO 2013/121520 A1
PTL 3: EP 2 511 493 A1

### Summary of Invention

### Technical Problem

In this regard, in this internal combustion engine, for example, if the amount of NOₓ which is discharged from the engine increases, the amount of hydrocarbons which is required for reducing the NOx increases. Therefore, to reduce well the NOₓ which is contained in exhaust gas, when the amount of NOx which is discharged from the engine increases, it becomes necessary to immediately make the amount of injection of hydrocarbons from the hydrocarbon feed valve increase up to the amount of hydrocarbons which is required for reducing the NOx. However, even if just increasing the amount of injection of hydrocarbons per injection, the amount of hydrocarbons which slips through the exhaust purification catalyst will just increase, but the amount of hydrocarbons which is used for reducing the NOₓ will not sufficiently increase and therefore the NOx will not be able to be reduced well. That is, in order to enable immediate increase of the amount of injection of hydrocarbons from the hydrocarbon feed valve, without slip through of hydrocarbons, up to the amount of hydrocarbons required for reducing the NOx when the amount of NOx discharged from the engine increases, new injection control which differs from that before and suitably controls the injection interval of hydrocarbons becomes necessary. Further, such new injection control of the injection interval of hydrocarbons becomes required when raising the temperature of an exhaust treatment device.

Furthermore, such a problem also occurs when using a reducing agent other than hydrocarbons to reduce the NOx which is contained in the exhaust gas.

The present invention provides a control system and control method of an internal combustion engine which enables NOₓ contained in the exhaust gas to be removed well without slip through of the reducing agent or enables the temperature of an exhaust treatment device to be raised well not only when using a reducing agent constituted by hydrocarbons of course but also a reducing agent other than hydrocarbons.

### Solution to Problem

That is, according to the present invention, there is provided a control system of an internal combustion engine in which a reducing agent is intermittently injected into an engine exhaust passage from a reducing agent feed valve within a predetermined range of period to remove NOx contained in an exhaust gas or to raise a temperature of an exhaust treatment device, the control system comprising a calculating part which calculates a suitable injection interval of the reducing agent corresponding to an operating state of the engine at the time of calculation with a predetermined fixed calculation period and which updates an injection interval by using the calculated injection interval as an updated new injection interval, and an injection executing part which executes a next injection of the reducing agent from the reducing agent feed valve when an elapsed time from when a previous injection was performed becomes the new injection interval or more which was updated to by the calculating part after the previous injection was performed, wherein an injection amount of the reducing agent per unit time and an amount of injection per injection are calculated with said predetermined fixed calculation period, and wherein said suitable injection interval is found by dividing said amount of injection per injection by said injection amount of the reducing agent per unit time.

Furthermore, according to the present invention, there is provided a control method of an internal combustion engine in which a reducing agent is intermittently injected into an engine exhaust passage from a reducing agent feed valve within a predetermined range of period to remove NOₓ contained in an exhaust gas or to raise a temperature of an exhaust treatment device, the control method comprising:
calculating a suitable injection interval of the reducing agent corresponding to an operating state of the engine at the time of calculation with a predetermined fixed calculation period and updating an injection interval by using the calculated injection interval as an updated new injection interval,
and executing a next injection of the reducing agent from the reducing agent feed valve when an elapsed time from when a previous injection was performed becomes the new injection interval or more which was updated to by the calculating part after the previous injection was performed, wherein an injection amount of the reducing agent per unit time and an amount of injection per injection are calculated with said predetermined fixed calculation period, and wherein said suitable injection interval is found by dividing said amount of injection per injection by said injection amount of the reducing agent per unit time.

### Advantageous Effects of Invention

It is possible to remove the NOx contained in the exhaust gas well or to raise the temperature of an exhaust treatment device well without causing slip through of the reducing agent while suppressing the amount of consumption of reducing agent.

### Brief Description of Drawings

[FIG. 1] FIG. 1 is an overall view of a compression ignition type internal combustion engine.
[FIG. 2] FIG. 2 is a view which schematically shows a surface portion of a catalyst carrier.
[FIG. 3] FIG. 3 is a view which shows changes in an air-fuel ratio of exhaust gas flowing into an exhaust purification catalyst.
[FIG. 4] FIG. 4 is a view which shows changes in an air-fuel ratio of exhaust gas flowing into an exhaust purification catalyst.
[FIGS. 5] FIGS. 5A and 5B are views for explaining an oxidation reduction reaction in an exhaust purification catalyst.
[FIG. 6] FIG. 6 is a view which shows a relationship between an injection period of hydrocarbons, that is, an injection interval It, and an NOₓ purification rate.
[FIG. 7] FIG. 7 is a view which shows changes in an air-fuel ratio of exhaust gas flowing into an exhaust purification catalyst.
[FIGS. 8] FIGS. 8A and 8B are views which show an injection density DX of hydrocarbons which are injected from a hydrocarbon feed valve, that is, an injection amount of hydrocarbons per unit time.
[FIGS. 9] FIG. 9A and 9B are views which show an amount of injection W of hydrocarbons per injection from a hydrocarbon feed valve.
[FIGS. 10] FIG. 10A and 10B are views which show an injection density DY of hydrocarbons which are injected from a hydrocarbon feed valve, that is, an injection amount of hydrocarbons per unit time.
[FIG. 11] FIG. 11 is a view for explaining an injection density DX and injection interval It of hydrocarbons.
[FIG. 12] FIG. 12 is a view for explaining a relationship between an injection interval It of hydrocarbons and an elapsed time "t" from which injection is performed.
[FIG. 13] FIG. 13 is a flow chart for exhaust purification control.
[FIG. 14] FIG. 14 is a flow chart for calculation of the elapsed time.

### Description of Embodiments

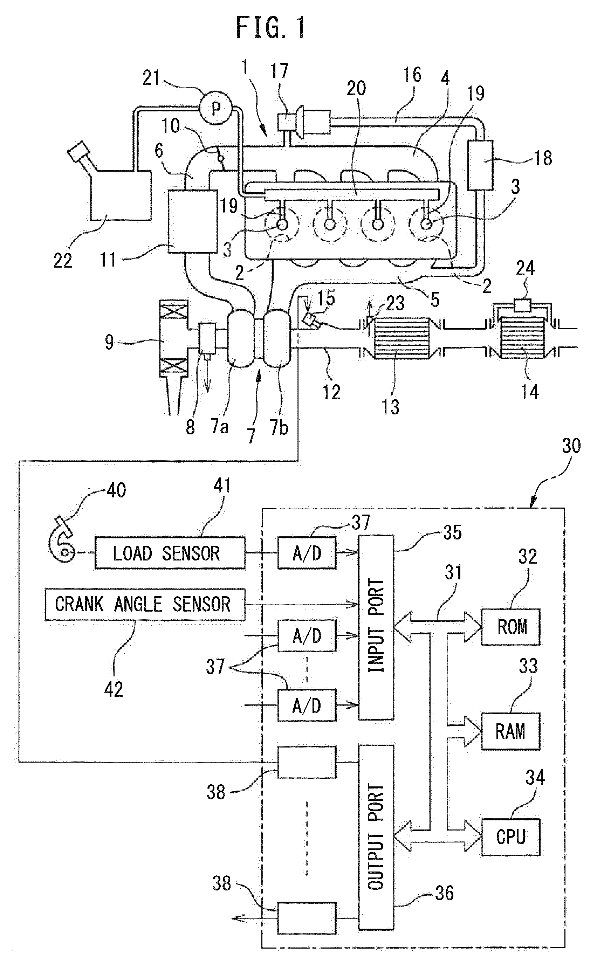

FIG. 1 is an overall view of a compression ignition type internal combustion engine.

Referring to FIG. 1, 1 indicates an engine body, 2 a combustion chamber of each cylinder, 3 an electronically controlled fuel injector for injecting fuel into each combustion chamber 2, 4 an intake manifold, and 5 an exhaust manifold. The intake manifold 4 is connected through an intake duct 6 to an outlet of a compressor 7a of an exhaust turbocharger 7, while an inlet of the compressor 7a is connected through an intake air amount detector 8 to an air cleaner 9. Inside the intake duct 6, a throttle valve 10 which is driven by an actuator is arranged. Around the intake duct 6, a cooling device 11 is arranged for cooling the intake air which flows through the inside of the intake duct 6. In the embodiment which is shown in FIG. 1, the engine cooling water is guided to the inside of the cooling device 11 where the engine cooling water is used to cool the intake air.

On the other hand, the exhaust manifold 5 is connected to an inlet of an exhaust turbine 7b of the exhaust turbocharger 7, and an outlet of the exhaust turbine 7b is connected through an exhaust pipe 12 to an inlet of an exhaust purification catalyst 13. In an embodiment of the present invention, this exhaust purification catalyst 13 is comprised of an NOx storage catalyst 13. An outlet of the exhaust purification catalyst 13 is connected to an inlet of a particulate filter 14 and, upstream of the exhaust purification catalyst 13 inside the exhaust pipe 12, a hydrocarbon feed valve 15 is arranged for feeding hydrocarbons comprised of diesel oil or other fuel used as fuel for a compression ignition type internal combustion engine. In the embodiment shown in FIG. 1, diesel oil is used as the hydrocarbons which are fed from the hydrocarbon feed valve 15. Note that, the present invention can also be applied to a spark ignition type internal combustion engine in which fuel is burned under a lean air-fuel ratio. In this case, from the hydrocarbon feed valve 15, hydrocarbons comprised of gasoline or other fuel used as fuel of a spark ignition type internal combustion engine are fed.

On the other hand, the exhaust manifold 5 and the intake manifold 4 are connected with each other through an exhaust gas recirculation (hereinafter referred to as an "EGR") passage 16. Inside the EGR passage 16, an electronically controlled EGR control valve 17 is arranged. Further, around the EGR passage 16, a cooling device 18 is arranged for cooling the EGR gas which flows through the inside of the EGR passage 16. In the embodiment which is shown in FIG. 1, the engine cooling water is guided to the inside of the cooling device 18 where the engine cooling water is used to cool the EGR gas. On the other hand, each fuel injector 3 is connected through a fuel feed tube 19 to a common rail 20. This common rail 20 is connected through an electronically controlled variable discharge fuel pump 21 to a fuel tank 22. The fuel which is stored inside of the fuel tank 22 is fed by the fuel pump 21 to the inside of the common rail 20. The fuel which is fed to the inside of the common rail 21 is fed through each fuel feed tube 19 to the fuel injector 3.

An electronic control unit 30 is comprised of a digital computer provided with a ROM (read only memory) 32, a RAM (random access memory) 33, a CPU (microprocessor) 34, an input port 35, and an output port 36, which are connected with each other by a bidirectional bus 31. A temperature sensor 23 is arranged at the inlet of the exhaust purification catalyst 13 for detecting the temperature of the exhaust gas flowing into the exhaust purification catalyst 13, and a differential pressure sensor 24 is attached to the particulate filter 14 for detecting the differential pressure before and after the particulate filter 14. The output signals of these temperature sensors 23, differential pressure sensor 24 and intake air amount detector 8 are input through respectively corresponding AD converters 37 to the input port 35. Further, an accelerator pedal 40 has a load sensor 41 connected to it which generates an output voltage proportional to the amount of depression L of the accelerator pedal 40. The output voltage of the load sensor 41 is input through a corresponding AD converter 37 to the input port 35. Furthermore, at the input port 35, a crank angle sensor 42 is connected which generates an output pulse every time a crankshaft rotates by, for example, 15°. On the other hand, the output port 36 is connected through corresponding drive circuits 38 to each fuel injector 3, the actuator for driving the throttle valve 10, hydrocarbon feed valve 15, EGR control valve 17, and fuel pump 21.

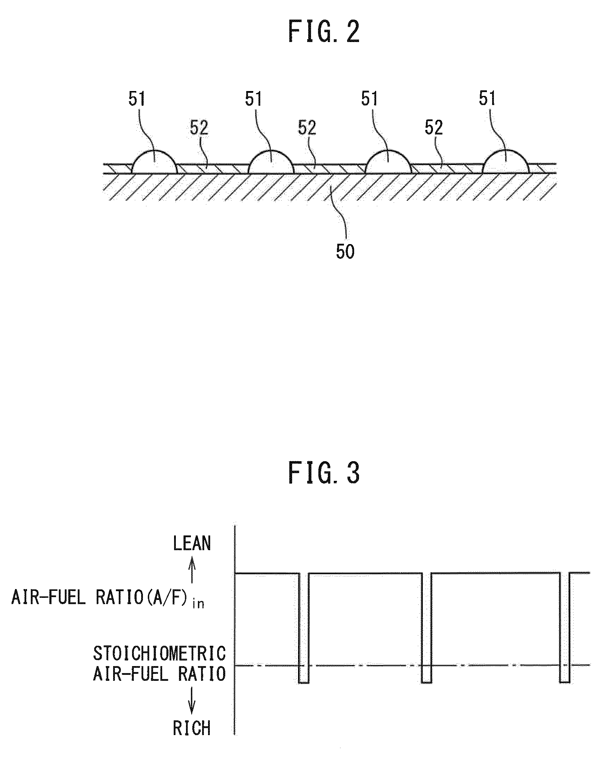

FIG. 2 schematically shows a surface part of a catalyst carrier which is carried on a substrate of the exhaust purification catalyst 13 shown in FIG. 1. At this exhaust purification catalyst 13, as shown in FIG. 2, for example, there is provided a catalyst carrier 50 made of alumina on which precious metal catalysts 51 comprised of platinum Pt are carried. Furthermore, on this catalyst carrier 50, a basic layer 52 is formed which includes at least one element selected from potassium K, sodium Na, cesium Cs, or another such alkali metal, barium Ba, calcium Ca, or another such alkali earth metal, a lanthanide or another such rare earth and silver Ag, copper Cu, iron Fe, iridium Ir, or another metal able to donate electrons to NOx. Note that, on the catalyst carrier 50 of the exhaust purification catalyst 13, in addition to platinum Pt, rhodium Rh or palladium Pd may be further carried.

Now then, as explained above, the exhaust purification catalyst 13 is comprised of an NOₓ storage catalyst. If referring to the ratio of the air and fuel (hydrocarbons) which are supplied into the engine intake passage, combustion chamber 2, and exhaust passage upstream of the exhaust purification catalyst 13 as the "air-fuel ratio of exhaust gas", the exhaust purification catalyst 13 functions to store NOₓ when the air-fuel ratio of the exhaust gas is lean and to release the stored NOₓ when the air-fuel ratio of the exhaust gas is made rich. That is, when the air-fuel ratio of the exhaust gas is lean, the NOₓ which is contained in exhaust gas is oxidized on the platinum Pt51 and diffuses in the form of nitrate acid ions NO₃- inside the basic layer 52 to become nitrates. That is, at this time, the NOₓ in the exhaust gas is stored in the form of nitrates inside the basic layer 52. On the other hand, when the air-fuel ratio of the exhaust gas is made rich, the concentration of oxygen in the exhaust gas falls, so the reaction proceeds in the opposite direction (NO₃⁻→NO₂) and therefore the nitrates which are absorbed in the basic layer 52 successively become nitrate acid ions NO₃⁻ which are released in the form of NO₂ from the basic layer 52. Next, the released NO₂ is reduced by the hydrocarbons HC and CO which are contained in the exhaust gas.

FIG. 3 shows the case where a little before the NOₓ storage ability of the basic layer 52 becomes saturated, the air-fuel ratio of the combustion gas in the combustion chamber 2 is made rich so as to make the air-fuel ratio (A/F)in of the exhaust gas flowing into the exhaust purification catalyst 13 temporarily rich. In this case, only at the time of a specific operating state where the air-fuel ratio of the combustion gas in the combustion chamber 2 cannot be made rich, hydrocarbons are injected from the hydrocarbon feed valve 15 to make the air-fuel ratio (A/F)in of the exhaust gas flowing into the exhaust purification catalyst temporarily rich. Note that, in the example which is shown in FIG. 3, the time interval of this rich control is 1 minute or more. In this case, the NOₓ which was stored in the basicity layer 52 when the air-fuel ratio (A/F)in of the exhaust gas was lean is released and reduced from the basic layer 52 all at once when the air-fuel ratio (A/F)in of the exhaust gas is made temporarily rich. However, when utilizing the storage and release of NOₓ of the exhaust purification catalyst 13 in this way to remove NOₓ, an extremely high NOₓ purification rate is obtained when the catalyst temperature TC is 250°C to 300°C, but the NOₓ purification rate falls when the catalyst temperature TC becomes a high temperature of 350°C or more.

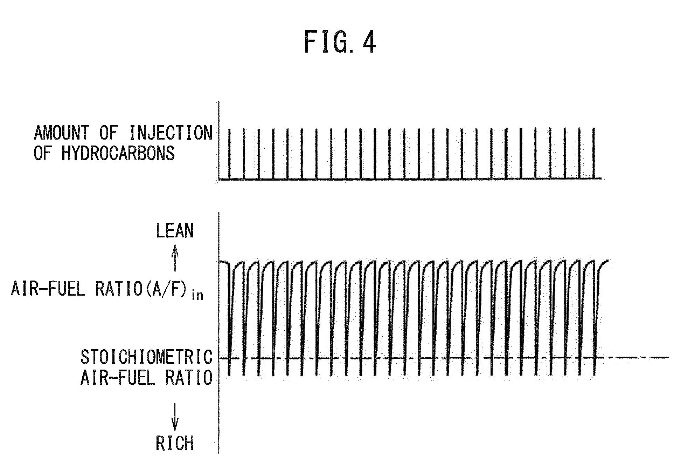

On the other hand, as shown in FIG. 4, if hydrocarbons are injected from the hydrocarbon feed valve 15 by a short period to make the air-fuel ratio (A/F)in of the exhaust gas rich before the NOₓ is stored in the basic layer 52, it is learned that a high NOₓ purification rate is obtained even if the catalyst temperature TC becomes a high temperature of 350°C or more. At this time, a large amount of reducing intermediate including nitrogen and hydrocarbons continues to be held or adsorbed on the surface of the basic layer 52, and it is learned that this reducing intermediate performs a central role in obtaining a high NOₓ purification rate.

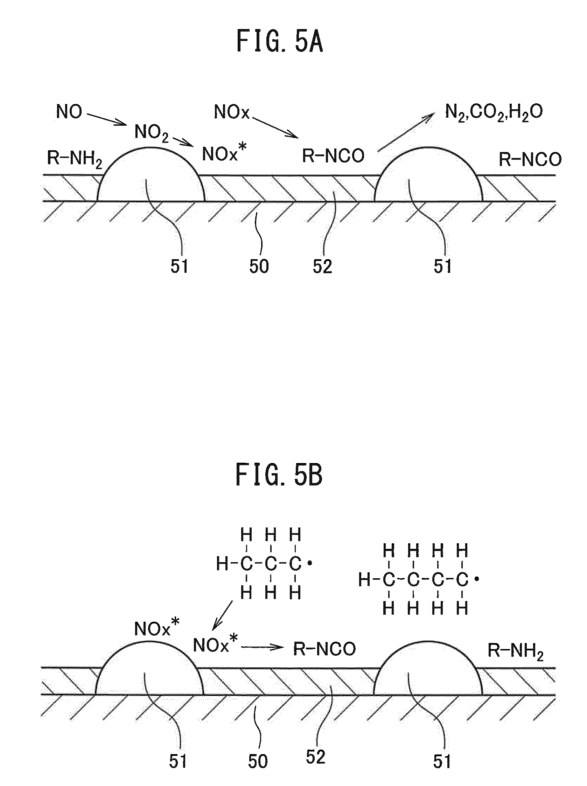

Next, this will be explained simply with reference to FIGS. 5A and 5B. Note that, these FIGS. 5A and 5B schematically show the surface parts of a catalyst carrier 50 of the exhaust purification catalyst 13. These FIGS. 5A and 5B show the reaction which is believed to occur due to the air-fuel ratio (A/F)in of the exhaust gas which flows into the exhaust purification catalyst 13 being made rich within a predetermined range of period. Note that, in these FIGS. 5A and 5B, FIG. 5A shows when the air-fuel ratio (A/F)in of the exhaust gas flowing into the exhaust purification catalyst 13 is lean, while FIG. 5B shows when hydrocarbons are fed from the hydrocarbon feed valve 15 and the air-fuel ratio (A/F)in of the exhaust gas flowing into the exhaust purification catalyst 13 is made rich.

Now then, as will be understood from FIG. 4, the air-fuel ratio of the exhaust gas flowing into the exhaust purification catalyst 13 is maintained lean except for one instant, so the exhaust gas flowing into the exhaust purification catalyst 13 usually becomes a state of oxygen excess. At this time, part of the NO which is contained in the exhaust gas deposits on the exhaust purification catalyst 13, and part of the NO which is contained in the exhaust gas, as shown in FIG. 5A, is oxidized on the platinum 51 and becomes NO₂. Next this NO₂ is further oxidized and becomes NO₃. Further, part of the NO₂ becomes NO₂⁻. Therefore, NO₂⁻ and NO₃ are formed on the platinum Pt51. The NO which deposits on the exhaust purification catalyst 13 and the NO₂⁻ and NO₃ which are formed on the platinum Pt51 are highly active. Therefore, below, these NO and NO₂⁻ and NO₃ will be referred to as "active NOₓ*".

Next, if hydrocarbons are injected from the hydrocarbon feed valve 15 and the air-fuel ratio (A/F)in of the exhaust gas flowing into the exhaust purification catalyst 13 is made rich, the majority of the hydrocarbons will react with the oxygen and be burned, while part of the hydrocarbons will be partially oxidized on the platinum 51 and, as shown in FIG. 5B, become radical hydrocarbons. In this regard, if the state of oxygen excess continues for a fixed time or more after active NOₓ* is produced, the active NOₓ* will be oxidized and be absorbed in the basic layer 53 in the form of nitric acid ions NO₃⁻. However, if hydrocarbons are injected from the hydrocarbon feed valve 15 before this fixed time elapses, as shown in FIG. 5B, the active NOₓ* will react on the platinum 51 with the radical hydrocarbons HC whereby a reducing intermediate will be generated. This reducing intermediate is deposited on or adsorbed at the surface of the basic layer 52. Note that, at this time, the majority of the reducing intermediate which is held or adsorbed on the surface of the basic layer 52 is believed to be the isocyanate compound R-NCO and amine compound R-NH₂.

Next, if the air-fuel ratio of the exhaust gas flowing into the exhaust purification catalyst 13 again becomes lean, as shown in FIG. 5A, the NOₓ contained in the exhaust gas will react with the reducing intermediate R-NCO and R-NH₂ which is held or adsorbed on the surface of the basic layer 52 and be converted to N₂, CO₂, and H₂O as shown in FIG. 5A. In this way, the NOx contained in the exhaust gas is removed by the reducible intermediate which is generated when hydrocarbons are injected from the hydrocarbon feed valve 15 and which is held or adsorbed on the surface of the basic layer 52. Therefore, to remove NOₓ well, it is necessary to generate a sufficient amount of reducing intermediate for removing the NOₓ and make the generated reducing intermediate be held or adsorbed on the basic layer 52.

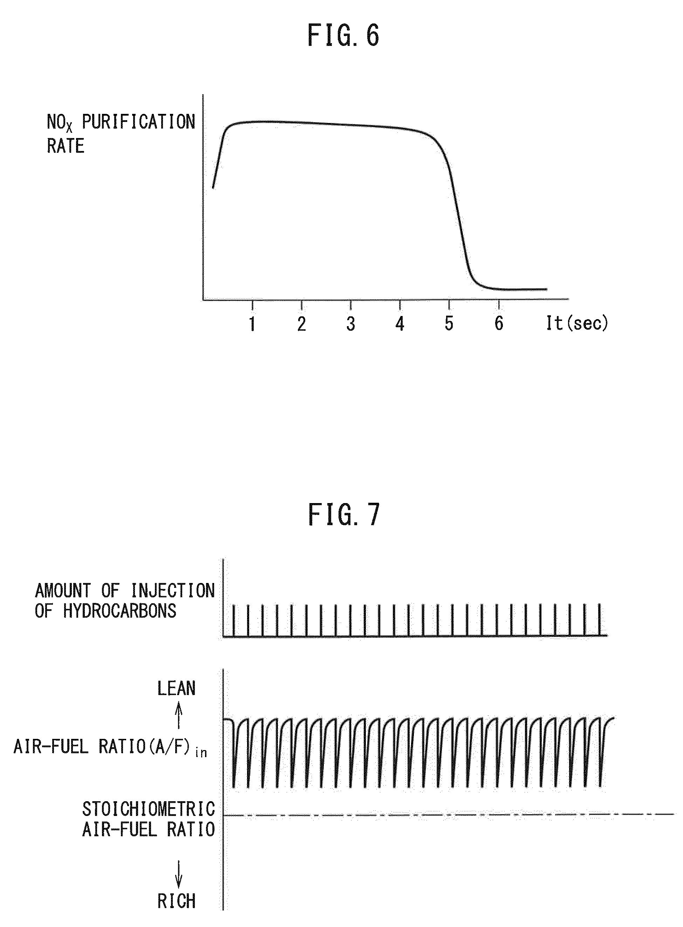

Now then, as explained above, if the injection period of hydrocarbons from the hydrocarbon feed valve 15, that is, the injection interval It, becomes longer, the time period during which oxygen is in excess between when hydrocarbons are injected and when hydrocarbons are next injected becomes longer. In this case, in the embodiment which is shown in FIG. 1, if the injection period of the hydrocarbons, that is, the injection interval It, becomes longer than 5 seconds or so, the active NOₓ* will start to be absorbed in the basic layer 52 in the form of nitrates. Therefore, as shown in FIG. 6, if the injection period of the hydrocarbons, that is, the injection interval It, becomes longer than 5 seconds or so, the NOₓ purification rate will fall. On the other hand, in this embodiment according to the present invention, if the injection period of the hydrocarbons, that is, the injection interval It, becomes about 0.3 second or less, the injected hydrocarbons will start to build upon the surface of the exhaust purification catalyst 13. Therefore, as shown in FIG. 6, if the injection period of the hydrocarbons, that is, the injection interval It, becomes substantially 0.3 second or less, the NOₓ purification rate will fall. Therefore, in this embodiment according to the present invention, the injection period of the hydrocarbons, that is, the injection interval It, is made from 0.3 second to 5 seconds.

In this regard, as explained above, if utilizing the storage and release of NOₓ of the exhaust purification catalyst 13 to remove the NOₓ, the NOₓ purification rate will fall if the catalyst temperature TC becomes a high temperature of 350°C or more. The NOₓ purification rate falls in this way if the catalyst temperature TC becomes 350°C or more because if the catalyst temperature TC becomes 350°C or more, NOₓ will become harder to store and the nitrates will break down under heat and be discharged from the exhaust purification catalyst 13 in the form of NO₂. That is, so long as storing NOₓ in the form of nitrates, obtaining a high NOₓ purification rate is difficult when the catalyst temperature TC is high. However, with the NOₓ purification method which is shown in FIGS. 4 and 5A and 5B, the amount of NOₓ which is stored in the form of nitrates is small and therefore even when the catalyst temperature TC is a high temperature of 400°C or more, a high NOₓ purification rate can be obtained. The NOₓ removal method which is shown in this FIGS. 4 and 5A and 5B will be referred to below as the "first NOₓ removal method", while the NOₓ removal method which utilizes the storage and release of NOₓ which is shown in FIG. 3 will be referred to below as the "second NOₓ removal method".

On the other hand, when regenerating the particulate filter 14, hydrocarbons are injected from the hydrocarbon feed valve 15 and the heat of the oxidation reaction of the injected hydrocarbons is used for the action of raising the temperature of the particulate filter 14. Further, when releasing the SOₓ which is stored in the exhaust purification catalyst 13 from the exhaust purification catalyst 13 as well, hydrocarbons are injected from the hydrocarbon feed valve 15 and the heat of the oxidation reaction of the injected hydrocarbons is used for the action of raising the temperature of the exhaust purification catalyst 13. FIG. 7 shows the changes in amount of injection of hydrocarbons from the hydrocarbon feed valve 15 and the air-fuel ratio (A/F)in of the exhaust gas flowing into the exhaust purification catalyst 13 when hydrocarbons are injected from the hydrocarbon feed valve 15 to raise an temperature of an exhaust treatment device such as the particulate filter 14 or the exhaust purification catalyst 13. As will be understood from FIG. 7, at this time, hydrocarbons are injected from the hydrocarbon feed valve 15 by a short period in the same way as the case which is shown in FIG. 4 while maintaining the air-fuel ratio (A/F)in of the exhaust gas flowing into the exhaust purification catalyst 13 lean.

Next, the method of calculation of the amount of injection of hydrocarbons from the hydrocarbon feed valve 15 when the first NOₓ removal method is used and the method of calculation of the amount of injection of hydrocarbons from the hydrocarbon feed valve 15 when raising the temperature of an exhaust treatment device 13, 14 such as the exhaust purification catalyst 13 or particulate filter 14 will be briefly explained. First, if explaining the method of calculation of the amount of injection of hydrocarbons from the hydrocarbon feed valve 15 when the first NOₓ removal method is used, to reduce the NOₓ flowing into the exhaust purification catalyst 13, an amount of hydrocarbons which is proportional to the amount of NOₓ (mg/s) flowing into the exhaust purification catalyst 13 per unit time is necessary. Therefore, when the amount of NOₓ (mg/s) flowing into the exhaust purification catalyst 13 per unit time increases, the amount of injection of hydrocarbons per unit time which becomes necessary for reducing the NOₓ flowing into the exhaust purification catalyst 13, that is, the injection density (mg/s), has to be increased.

On the other hand, as explained above, the NOₓ flowing into the exhaust purification catalyst 13 is reduced by the reducing intermediate which is held or adsorbed on the basic layer 52. In this case, the time during which the reducing intermediate is held or adsorbed on the basic layer 52 becomes shorter the higher the temperature TC of the exhaust purification catalyst 13. On the other hand, when the time during which the reducing intermediate is held or adsorbed at the basic layer 52 becomes shorter in this way, to reduce well the NOₓ flowing into the exhaust purification catalyst 13, it becomes necessary to generate a large amount of reducing intermediate in a short time, and to this end, it is necessary to increase the injection density (mg/s) of the hydrocarbons, that is, the injection amount of hydrocarbons per unit time. Therefore, when the temperature TC of the exhaust purification catalyst 13 becomes higher, it is necessary to increase the injection density (mg/s) of the hydrocarbons.

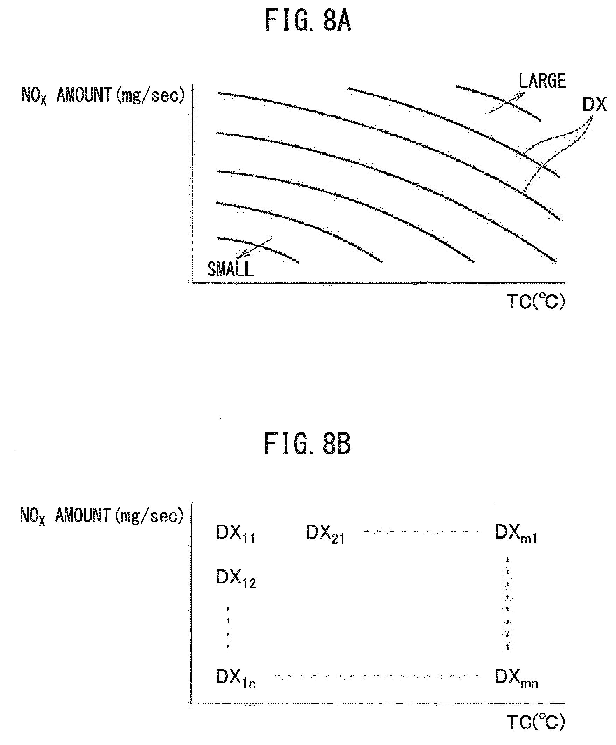

Therefore, the injection density (mg/s) of hydrocarbons per unit time which is required for reducing the NOₓ flowing into the exhaust purification catalyst 13, as shown in FIG. 8A, becomes a function of the amount of NOₓ (mg/s) flowing into the exhaust purification catalyst 13 per unit time and the temperature TC of the exhaust purification catalyst 13. Note that, in FIG. 8A, the solid line DX shows the equivalent injection density line of hydrocarbons. Therefore, from FIG. 8A, it will be understood that the injection density DX (mg/s) of hydrocarbons increases along with an increase of the amount of NOₓ (mg/s) and increases along with a rise in the temperature TC of the exhaust purification catalyst 13. In this embodiment according to the present invention, this injection density DX (mg/s) of hydrocarbons is stored as a function of the amount of NOₓ (mg/s) flowing into the exhaust purification catalyst 13 per unit time and the temperature TC of the exhaust purification catalyst 13 in the form of a map such as shown in FIG. 8B in advance in the ROM 32.

On the other hand, to increase the amount of generation of the reducing intermediate, the concentration of the hydrocarbons flowing into the exhaust purification catalyst 13 has to be raised. For this, it is necessary to increase the amount of injection of hydrocarbons per injection from the hydrocarbon feed valve 15. However, if increasing the amount of injection of hydrocarbons per injection from the hydrocarbon feed valve 15 to raise the concentration of the hydrocarbons which flow into the exhaust purification catalyst 13, hydrocarbons will slip through the exhaust purification catalyst 13. Therefore, the amount of injection (mg) of hydrocarbons per injection is made an amount giving the highest amount of generation of reducing intermediate without causing slip through of hydrocarbons.

In this regard, if the amount of injection Q (mg) of fuel which is injected into the engine combustion chamber 2 increases, the amount of exhaust gas increases, so the concentration of the hydrocarbons flowing into the exhaust purification catalyst 13 falls. In this case, to make the concentration of the hydrocarbons flowing into the exhaust purification catalyst 13 a concentration giving the highest amount of generation of reducing intermediate without causing slip through of hydrocarbons, it is necessary to increase the amount of injection (mg) of hydrocarbons per injection. Therefore, it is necessary to increase the amount of injection (mg) of hydrocarbons per injection as the amount of injection Q (mg) of fuel which is injected into the combustion chamber 2 increases.

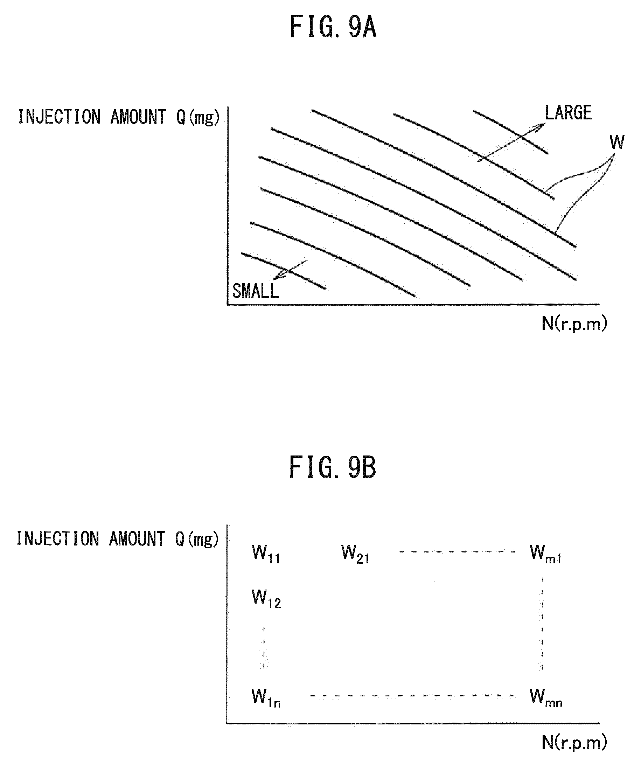

On the other hand, if the engine speed N rises, the amount of exhaust gas increases, so the concentration of the hydrocarbons flowing into the exhaust purification catalyst 13 falls. In this case, to make the concentration of the hydrocarbons flowing into the exhaust purification catalyst 13 a concentration giving the highest amount of generation of reducing intermediate without causing slip through of hydrocarbons, it is necessary to increase the amount of injection (mg) of hydrocarbons per injection. Therefore, it is necessary to increase the amount of injection (mg) of hydrocarbons per injection as the engine speed N becomes higher. Therefore, the amount of injection (mg) of hydrocarbons per injection, as shown in FIG. 9A, becomes a function of the amount of injection Q (mg) of fuel which is injected into the combustion chamber 2 and the engine speed N. Note that, in FIG. 9A, the solid line W shows the equevalent amounts of injection of hydrocarbons. Therefore, from FIG. 9A, it will be understood that the amount of injection W (mg) of hydrocarbons per injection increases as the amount of injection Q (mg) of fuel increases and increases as the engine speed N becomes higher.

In this embodiment according to the present invention, the optimum amount of injection W (mg) of hydrocarbons per injection is stored as a function of the amount of injection Q (mg) of fuel into the combustion chamber 2 and the engine speed N is the form of a map such as shown in FIG. 9B in advance in the ROM 32. Furthermore, in this embodiment according to the present invention, the injection interval It of hydrocarbons is calculated by dividing the amount of injection W (mg) of hydrocarbons per injection shown in FIG. 9B by the injection density DX (mg/s) of hydrocarbons shown in FIG. 8B. In this case, if injecting hydrocarbons by the amount of injection (mg) per injection which is found from the map shown in FIG. 9B at this injection interval It, the concentration of hydrocarbons flowing into the exhaust purification catalyst 13 becomes a concentration giving the highest amount of generation of reducing intermediate without causing slip through of hydrocarbons. Therefore, it is possible to keep down the amount of consumption of hydrocarbons while removing well the NOx contained in exhaust gas without causing slip through of hydrocarbons.

Next, the method of calculation of the amount of injection of hydrocarbons from the hydrocarbon feed valve 15 when raising the temperature of the particulate filter 14 will be briefly explained. The higher the concentration of hydrocarbons in the exhaust gas, the greater the amount of generation of heat of oxidation reaction at an exhaust treatment device 13, 14 such as the exhaust purification catalyst 13 or particulate filter 14 and the faster the particulate filter 14 can be made to rise to the target temperature. In this case, the higher the injection density of hydrocarbons per unit time, the higher the concentration of hydrocarbons in the exhaust gas and therefore the higher the injection density of hydrocarbons per unit time is made, the faster the particulate filter 14 can be made to rise to the target temperature. In this case, to make the particulate filter 14 quickly rise to the target temperature without overshooting it, it is preferable to raise the injection density of hydrocarbons per unit time the larger the temperature difference (TG-TC) between the current temperature TC and the target temperature TG of the exhaust treatment device 13, 14. Therefore, when raising the temperature of the particulate filter 14, the injection density of hydrocarbons per unit time is made higher the larger the temperature difference (TG-TC) between the current temperature TC and the target temperature TG of the exhaust treatment device 13, 14.

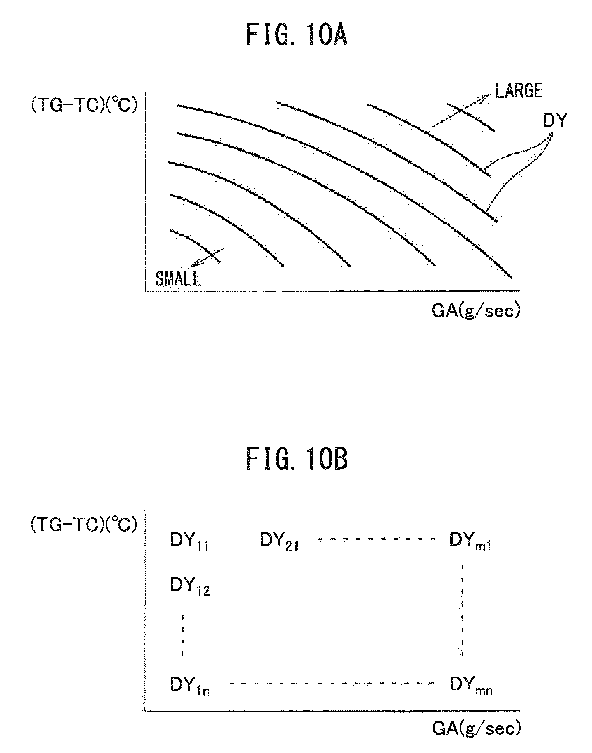

On the other hand, if the amount of exhaust gas becomes greater, the concentration of hydrocarbons in the exhaust gas will fall. In this case, to prevent the concentration of hydrocarbons in the exhaust gas from falling, it is necessary to raise the injection density of hydrocarbons per unit time the larger the amount of exhaust gas. Therefore, the injection density of hydrocarbons per unit time is made higher as the amount of exhaust gas increases. Therefore, the injection density (mg/s) of hydrocarbons per unit time, as shown in FIG. 10A, becomes a function of the temperature difference (TG-TC) between the current temperature TC of the exhaust treatment device 13, 14 and the target temperature TG and the amount of exhaust gas (g/s). Note that, in FIG. 10A, the solid line DY shows the equivalent injection density of hydrocarbons. Therefore, from FIG. 10A, it is learned that the injection density DY (mg/s) of hydrocarbons per unit time is made higher the larger the temperature difference (TG-TC) and is made higher the larger the amount of exhaust gas (g/s).

In this embodiment according to the present invention, the injection density DY (mg/s) of hydrocarbons per unit time when raising the temperature of the particulate filter 14 is stored as a function of the temperature difference (TG-TC) and the amount of exhaust gas (g/s) in the form of a map such as shown in FIG. 10B in advance in the ROM 32. Furthermore, in this embodiment according to the present invention, the injection interval It of hydrocarbons is calculated by dividing the amount of injection W (mg) of hydrocarbons per injection shown in FIG. 9B by the injection density DY (mg/s) of hydrocarbons shown in FIG. 10B. In this case, if injecting hydrocarbons by the amount of injection (mg) per injection which is found from the map shown in FIG. 9B at this injection interval It, the concentration of hydrocarbons flowing into the exhaust purification catalyst 13 becomes a concentration enabling the particulate filter 14 to be quickly raised to the target temperature without overshooting it and without causing slip through of hydrocarbons. Therefore, it is possible to suppress the consumption of hydrocarbons while making the particulate filter 14 quickly rise to the target temperature without overshooting it and without causing slip through of hydrocarbons.

On the other hand, the injection density (mg/s) of hydrocarbons per unit time when raising the temperature of the exhaust purification catalyst 13 to release the SOₓ stored in the exhaust purification catalyst 13 from the exhaust purification catalyst 13 is also stored in the form of a map such as shown in FIG. 10B in advance in the ROM 32. In this case as well, the injection interval It of hydrocarbons is calculated by dividing the amount of injection W (mg) of hydrocarbons per injection shown in FIG. 9B by the injection density (mg/s) of hydrocarbons stored in advance in the ROM 32. In this case as well, if injecting hydrocarbons by the amount of injection (mg) per injection which is found from the map shown in FIG. 9B at this injection interval It, the concentration of hydrocarbons flowing into the exhaust purification catalyst 13 becomes a concentration enabling the exhaust purification catalyst 13 to be quickly raised to the SOₓ release temperature without overshooting it and without causing slip through of hydrocarbons. Therefore, it is possible to suppress the consumption of hydrocarbons while making the exhaust purification catalyst 13 quickly rise to the SOₓ release temperature without overshooting it and without causing slip through of hydrocarbons.

Next, the technical meaning of the injection interval It will be explained with reference to the example of the case of removing NOx which is contained in exhaust gas. Now then, as explained above, this injection interval It is calculated by dividing the amount of injection W (mg) of hydrocarbons per injection which is shown in FIG. 9B by the injection density DX (mg/s) of hydrocarbons which is shown in FIG. 8B. In this case, as explained above, if injecting hydrocarbons by the amount of injection (mg) per injection which is found from the map which is shown in FIG. 9B at this injection interval It, the concentration of the hydrocarbons which flow into the exhaust purification catalyst 13 becomes the concentration giving the highest amount of generation of reducible intermediate without causing slip through of hydrocarbons. Therefore, it becomes possible to suppress the amount of consumption of hydrocarbons while removing well the NOx which is contained in the exhaust gas without slip through of hydrocarbons.

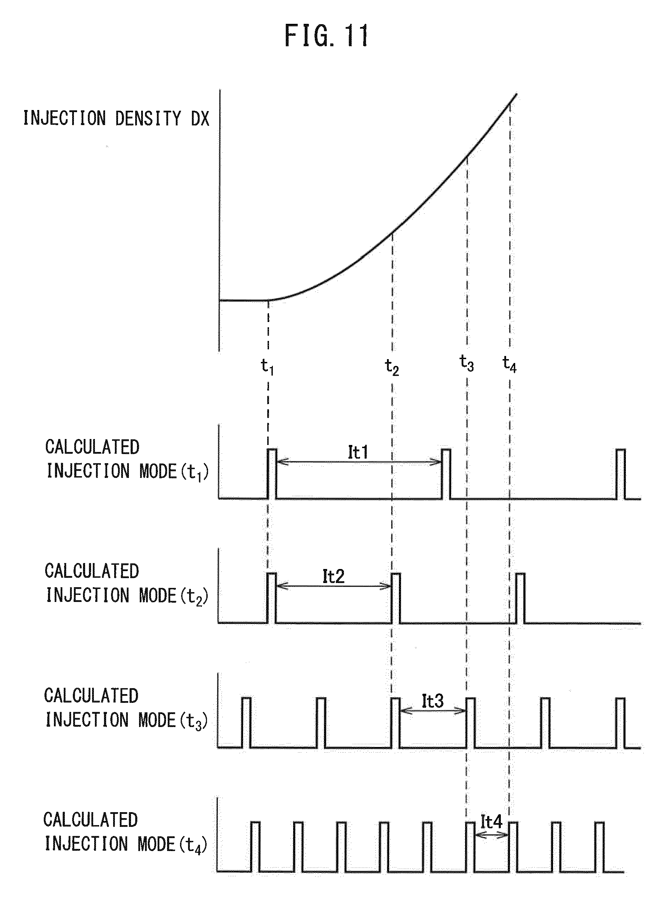

Next, this will be explained with reference to FIG. 11. This FIG. 11 shows the case where the amount of NOₓ (mg/s) flowing into the exhaust purification catalyst 13 per unit time increases as time elapses from t₁ to t₄. At this time, as shown in FIG. 11, the injection density DX (mg/s) of hydrocarbons per unit time increase along with the elapse of time. Further, FIG. 11 shows the calculated injection modes (t₁), (t₂), (t₃), and (t₄) at the times t₁, t₂, t₃, and t₄, that is, the amounts of injection W (mg) of hydrocarbons per injection calculated at the times t₁, t₂, t₃, and t₄ and the injection intervals It1, It2, It3, and It4 calculated at the times t₁, t₂, t₃, and t₄. For example, at the calculated injection mode (t₁), the amount of injection W (mg) of hydrocarbons per injection shown in FIG. 9B at the time of the time t₁ and the injection interval It1 calculated by dividing this amount of injection W (mg) of hydrocarbons per injection by the injection density DX (mg/s) of hydrocarbons at the time t₁ shown in FIG. 11 are shown.

In the same way, at the calculated injection mode (t₂), the amount of injection W (mg) of hydrocarbons per injection shown in FIG. 9B at the time of the time t₂ and the injection interval It2 calculated by dividing this amount of injection W (mg) of hydrocarbons per injection by the injection density DX (mg/s) of hydrocarbons at the time t₂ shown in FIG. 11 are shown. At the calculated injection mode (t₃), the amount of injection W (mg) of hydrocarbons per injection shown in FIG. 9B at the time of the time t₃ and the injection interval It3 calculated by dividing this amount of injection W (mg) of hydrocarbons per injection by the injection density DX (mg/s) of hydrocarbons at the time t₃ shown in FIG. 11 are shown. The same is true for the calculated injection mode (t₄).

Now then, the injection intervals It1, It2, It3, and It4 at the calculated injection modes (t₁), (t₂), (t₃), and (t₄) become injection intervals giving the highest amounts of generation of reducing intermediate at the times t₁, t₂, t₃, and t₄ without causing slip through of hydrocarbons. Therefore, at the times t₁, t₂, t₃, and t₄, if injecting hydrocarbons by the calculated amounts of injection (mg) per injection at the injection intervals It1, It2, It3, and It4, the concentration of hydrocarbons flowing into the exhaust purification catalyst 13 becomes a concentration giving the highest amount of generation of reducing intermediate without causing slip through of hydrocarbons. Therefore, it becomes possible to suppress the amount of consumption of hydrocarbons while removing well the N0_{X} contained in the exhaust gas without slip through of hydrocarbons. That is, the injection intervals It1, It2, It3, and It4 become the best injection intervals at the times t₁, t₂, t₃, and t₄.

Therefore, for example, at the time t₂, if the injection interval between the previous injection at the time t₁ and the current injection at the time t₂ becomes the best injection interval It2 at the time t₂, at the time t₂, the result becomes the best injection mode where it is possible to suppress the amount of consumption of hydrocarbons while removing the NOₓ contained in the exhaust gas well without causing slip through of hydrocarbons. Similarly, at the time t₃, if the injection interval between the previous injection at the time t₂ and the current injection at the time t₃ becomes the best injection interval It3 at the time t₃, at the time t₃, the result becomes the best injection mode where it is possible to remove the NOx well, and at the time t₄, if the injection interval between the previous injection at the time t₃ and the current injection at the time t₄ becomes the best injection interval It4 at the time t₄, at the time t₄, the result becomes the best injection mode where it is possible to remove the NOx well.

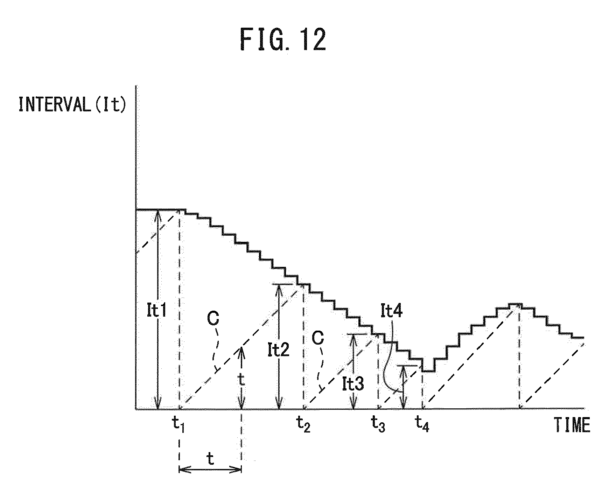

That is, if one injection is performed and the next injection is performed when the elapsed time from when that one injection is performed matches the best injection interval It of the next performed injection, for example even if the amount of NOₓ flowing into the exhaust purification catalyst 13 per unit time rapidly increases, NOₓ is removed well. Therefore, at this time, it can be said that each injection is performed at the best timing from the viewpoint of removing NOx. Next, a specific method for such injection control will be explained while referring to FIG. 12.

The ordinate of FIG. 12 shows the injection interval It which is calculated from the injection density DX (mg/s) of hydrocarbons and the amount of injection W (mg) of hydrocarbons per injection, while the abscissa of FIG. 12 shows the time. Note that, on the abscissa of FIG. 12, the times t₁, t₂, t₃, and t₄ correspond to the times t₁, t₂, t₃, and t₄ in FIG. 11. In the embodiment which is shown in FIG. 12, the calculation period of the injection interval It is a short period of 4 msec to 20 msec or so. Therefore, the injection interval It is continuously calculated by this short period.

On the other hand, as explained above, in this embodiment according to the present invention, when the NOₓ removal action by the first NOx removal method is being performed, the injection period of hydrocarbons, that is, the injection interval It, is made 0.3 second to 5 seconds. The shortest injection interval It in this case is 0.3 second, that is, 300 msec, therefore it is learned that the calculation period of the injection interval It is smaller than the range of injection period of hydrocarbons (0.3 second to 5 seconds). On the other hand, the broken line which extends at a slant in FIG. 12 shows the value of the time counter C, that is, the elapsed time t. This time counter C is reset when injection is performed, so the elapsed time "t" shows the elapsed time from when injection was performed. In the example which is shown in FIG. 12, the time counter C is reset at the times t₁, t₂, t₃, and t₄. Therefore, the elapsed time "t" shows the elapsed time from the times t₁, t₂, t₃, and t₄.

Now then, in this embodiment according to the present invention, as shown in FIG. 12, when the value of the time counter C shown by the broken lines reaches the calculated injection interval It, that is, when the elapsed time "t" from when injection was performed becomes equal to the injection interval It, the next injection is performed. For example, when the elapsed time "t" from when injection was performed at the time t₁ becomes equal to the calculated injection interval It at the time t₂, the next injection is performed at the time t₂, while when the elapsed time "t" from which injection was performed at the time t₂ becomes equal to the calculated injection interval It at the time t₃, the next injection is performed at the time t₃.

As opposed to this, as shown in FIG. 12, at the time t₄, when the elapsed time "t" from which injection was performed at the time t₃ exceeds the calculated injection interval It, the next injection is performed. Therefore, if considering this case as well, when the elapsed time "t" from when the injection was performed becomes the calculated injection interval It or more, the next injection is performed. By doing this, hydrocarbons can be injected from the hydrocarbon feed valve 15 at the best injection interval It.

On the other hand, as explained above, when raising the temperature of an exhaust treatment device 13, 14 such as the exhaust purification catalyst 13 or particulate filter 14 to regenerate the particulate filter 14 or when raising the temperature of the exhaust purification catalyst 13 to release the SOₓ stored in the exhaust purification catalyst 13 from the exhaust purification catalyst 13, as shown in FIG. 7, hydrocarbons are injected from the hydrocarbon feed valve 15 by a short period while maintaining the air-fuel ratio (A/F)in of the exhaust gas flowing into the exhaust purification catalyst 13 lean. In this way, when raising the temperature of an exhaust treatment device 13, 14 as well, the injection control which is shown in FIG. 11 and FIG. 12 is performed. In this way, the injection control according to the present invention which is shown in FIG. 11 and FIG. 12 can be applied not only for the NOₓ removal method by the first NOₓ removal method, but also when raising the temperature of the exhaust treatment devices 13, 14.

On the other hand, as explained above, in the NOₓ removal method by the second NOₓ removal method, hydrocarbons are injected from the hydrocarbon feed valve 15 to release NOₓ when the amount of NOₓ stored in the exhaust purification catalyst 13 exceeds a fixed amount. When the injection timing of hydrocarbons from the hydrocarbon feed valve 15 is controlled in accordance with the amount of storage in this way, it is not possible to use the injection control according to the present invention which is shown in FIG. 11 and FIG. 12. On the other hand, when the injection timing is not being controlled in accordance with the change of the amount of storage in this way, sometimes the injection control according to the present invention which is shown in FIG. 11 and FIG. 12 can be applied even if using a reducing agent other than hydrocarbons as the reducing agent. For example, it is possible to apply the injection control according to the present invention which is shown in FIG. 11 and FIG. 12 when using a urea aqueous solution as the reducing agent and controlling the amount of feed of urea aqueous solution in accordance with the amount of NOₓ.

Therefore, according to the present invention, in a control system of an internal combustion engine in which a reducing agent is intermittently injected into an engine exhaust passage from a reducing agent feed valve 15 within a predetermined range of period to remove NOx contained in an exhaust gas or to raise a temperature of an exhaust treatment device 13, 14, the control system comprises a calculating part which calculates a suitable injection interval It of the reducing agent corresponding to an operating state of the engine at the time of calculation with a predetermined fixed calculation period and which updates an injection interval by using the calculated injection interval It as an updated new injection interval It, and an injection executing part which executes a next injection of the reducing agent from the reducing agent feed valve 15 when an elapsed time from when a previous injection was performed becomes the new injection interval It or more which was updated to by the calculating part after the previous injection was performed.

Alternatively, if viewing the present invention as a method, according to the present invention, there is provided a control method of an internal combustion engine in which a reducing agent is intermittently injected into an engine exhaust passage from a reducing agent feed valve 15 within a predetermined range of period to remove NOₓ contained in an exhaust gas or to raise a temperature of an exhaust treatment device 13, 14, the control method comprises: calculating a suitable injection interval It of the reducing agent corresponding to an operating state of the engine at the time of calculation with a predetermined fixed calculation period and updating an injection interval by using the calculated injection interval It as an updated new injection interval It, and executing a next injection of the reducing agent from the reducing agent feed valve 15 when an elapsed time from when a previous injection was performed becomes the new injection interval It or more which was updated to by the calculating part after the previous injection was performed.

In this case, in this embodiment according to the present invention, the electronic control unit 30 forms the calculating part and the injection executing part. Note that, as explained above, in this embodiment according to the present invention, the predetermined fixed calculation period of the injection interval It is shorter than the range of the injection period of the reducing agent from the reducing agent feed valve 15. Further, in this embodiment according to the present invention, the injection density DX, DY of the reducing agent and the amount of injection W per injection are calculated at the predetermined fixed calculation period, and the optimum injection interval It is found by dividing the amount of injection W per injection by the injection density DX, DY.

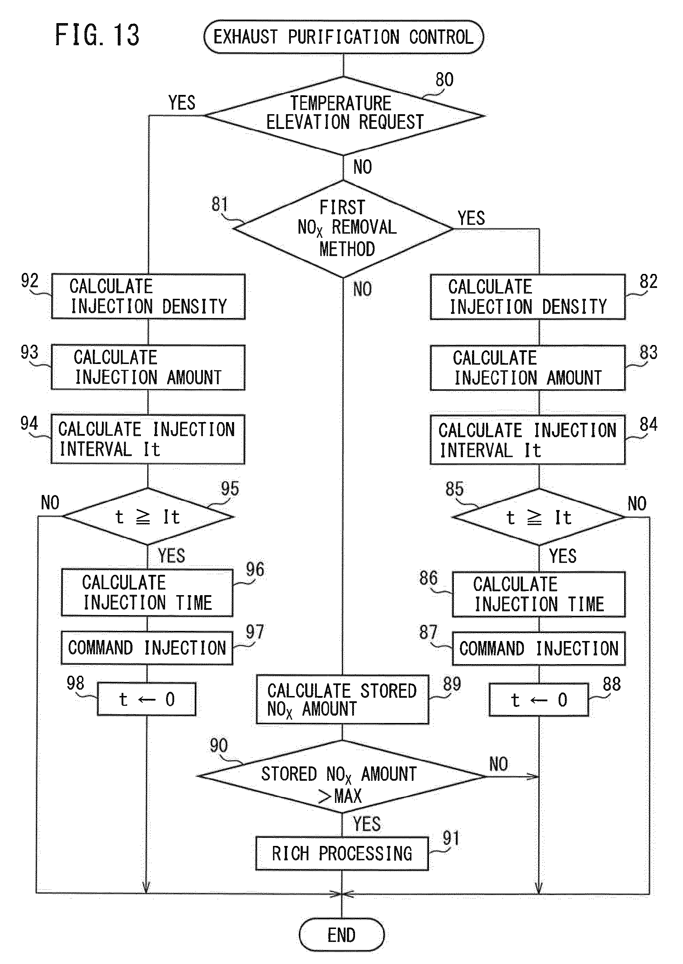

Next, referring to FIG. 13, using as an example the case of the hydrocarbon feed valve 15 injecting hydrocarbons, the injection control according to the present invention will be explained. FIG. 13 shows an exhaust purification control routine for injection control according to the present invention. This routine is executed repeatedly at time intervals of 0.3 second to 5 seconds.

Referring to FIG. 13, first, at step 80, it is judged if a temperature elevation request which shows that an exhaust treatment device 13, 14 such as the exhaust purification catalyst 13 or particulate filter 14 should be raised in temperature is issued. When the temperature elevation request is not issued, the routine proceeds to step 81 where it is judged if the operating state is one where the first NOₓ removal method should be used to remove NOₓ. When an operating state where the first NOₓ removal method should be used to remove NOₓ, the routine proceeds to step 82 where the injection density DX (mg/s) of hydrocarbons is calculated from the map shown in FIG. 8B. Next, at step 83, the optimum amount of injection W (mg) of hydrocarbons per injection is calculated from the map shown in FIG. 9B.

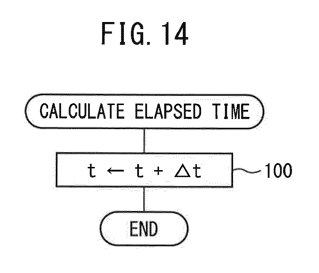

Next, at step 84, the injection interval It of hydrocarbons is calculated by dividing the amount of injection W (mg) of hydrocarbons per injection which was calculated at step 83 by the injection density DX (mg/s) of hydrocarbons which was calculated at step 82. Next, at step 85, it is judged if the elapsed time "t" from when the previous injection was performed becomes the injection interval It which was calculated at step 84 or more. This elapsed time is calculated by the elapsed time calculation routine shown in FIG. 14. This elapsed time calculation routine is repeatedly executed every fixed time Δt. When it is judged at step 85 that the elapsed time "t" from when the previous injection was performed is shorter than the injection interval It which was calculated at step 84, the processing cycle is ended.

As opposed to this, when it is judged at step 85 that the elapsed time "t" from when the previous injection was performed becomes the injection interval It which was calculated at step 84 or more, the routine proceeds to step 86 where the injection time from the hydrocarbon feed valve 15 which is required for injecting the amount of injection W which was calculated at step 83 is calculated. Next, at step 87, an injection command which shows that the hydrocarbon feed valve 15 should inject hydrocarbons is issued. If the injection command is issued, hydrocarbons are injected from the hydrocarbon feed valve 15 over the injection time which is calculated at step 86. Next, at step 88, the elapsed time "t" is cleared. If the elapsed time "t" is cleared, the elapsed time calculation routine which is shown in FIG. 14 is used to again start the calculation of the elapsed time "t" from zero.

On the other hand, when it is judged at step 81 that the operating state is not one where the first NOₓ removal method should be used to remove NOₓ, the routine proceeds to step 89 where the second NOₓ removal method is used to remove NOₓ. That is, at step 89, the amount of NOₓ stored in the exhaust purification catalyst 13 is calculated. Specifically speaking, if the operating state of the engine is determined, the amount of NOₓ discharged from the engine is determined, so the amount of NOₓ which is stored at the exhaust purification catalyst 13 is calculated by cumulatively adding the amount of NOₓ discharged from the engine. Next, at step 90, it is judged if the amount of NOₓ which is stored in the exhaust purification catalyst 13 exceeds a predetermined allowable value MAX. When the amount of NOₓ which is stored in the exhaust purification catalyst 13 exceeds the predetermined allowable value MAX, the routine proceeds to step 91 where the air-fuel ratio of the exhaust gas flowing into the exhaust purification catalyst 13 is made temporarily rich to release NOₓ from the exhaust purification catalyst 13.

On the other hand, when it is judged at step 80 that the temperature elevation request which shows that the temperature of an exhaust treatment device 13, 14 such as the exhaust purification catalyst 13 or particulate filter 14 should be raised is issued, the routine proceeds to step 92 where temperature elevation control is performed. That is, when the temperature elevation request which shows that the particulate filter 14 should be raised in temperature is issued, the injection density DY (mg/s) of hydrocarbons per unit time is calculated from the map shown in FIG. 10B, next, at step 93, the optimum amount of injection W (mg) of hydrocarbons per injection is calculated from the map shown in FIG. 9B. Next, at step 94, the injection interval It of hydrocarbons is calculated by dividing the amount of injection W (mg) of hydrocarbons per injection which was calculated at step 93 by the injection density DY (mg/s) of hydrocarbons which was calculated at step 92.

Next, at step 95, it is judged if the elapsed time "t" from when the previous injection was performed becomes the injection interval It which was calculated at step 94 or more. When it is judged that the elapsed time "t" from when the previous injection was performed becomes the injection interval It which was calculated at step 94 or more, the routine proceeds to step 96 where the injection time from the hydrocarbon feed valve 15 which is required for injecting the amount of injection W which was calculated at step 93 is calculated. Next, at step 97, an injection command which shows that the hydrocarbon feed valve 15 should inject hydrocarbons is made to be issued. If the injection command is made to be issued, hydrocarbons are injected from the hydrocarbon feed valve 15 over the injection time which was calculated at step 96. Next, at step 98, the elapsed time "t" is cleared.

As opposed to this, when the temperature elevation request which shows that the exhaust purification catalyst 13 should be raised in temperature to release the SOₓ stored in the exhaust purification catalyst 13 from the exhaust purification catalyst 13 is issued, at step 92, the injection density DY (mg/s) of hydrocarbons per unit time is calculated from a separate map similar to the map shown in FIG. 10B, next, at step 93, the optimal amount of injection W (mg) of hydrocarbons per injection is calculated from the map shown in FIG. 9B. Next, at step 94, the injection interval It of hydrocarbons is calculated by dividing the amount of injection W (mg) of hydrocarbons per injection which was calculated at step 93 by the injection density DY (mg/s) of hydrocarbons which was calculated at step 92. Next, at step 95 to step 98, processing similar to the time of the above-mentioned temperature elevation control of the exhaust treatment device 13, 14 is performed.

### Reference Signs List

- 4.: intake manifold
- 5.: exhaust manifold
- 12.: exhaust pipe
- 13.: exhaust purification catalyst
- 14.: particulate filter
- 15.: hydrocarbon feed valve

## Claims

1. A control system of an internal combustion engine in which a reducing agent is intermittently injected into an engine exhaust passage from a reducing agent feed valve (15) within a predetermined range of period to remove NOx contained in an exhaust gas or to raise a temperature of an exhaust treatment device (13, 14), said control system comprising a calculating part (30) which calculates a suitable injection interval (It) of the reducing agent corresponding to an operating state of the engine at the time of calculation with a predetermined fixed calculation period and which updates an injection interval by using the calculated injection interval (It) as an updated new injection interval (It), and an injection executing part (30) which executes a next injection of the reducing agent from the reducing agent feed valve (15) when an elapsed time (t) from when a previous injection was performed becomes the new injection interval (It) or more which was updated to by the calculating part (30) after the previous injection was performed, wherein an injection amount of the reducing agent per unit time and an amount (W) of injection per injection are calculated with said predetermined fixed calculation period, and wherein said suitable injection interval (It) is found by dividing said amount (W) of injection per injection by said injection amount of the reducing agent per unit time.

2. The control system of internal combustion engine as claimed in claim 1, wherein said predetermined fixed calculation period is shorter than said range of period of injection of the reducing agent from the reducing agent feed valve (15).

3. A control method of an internal combustion engine in which a reducing agent is intermittently injected into an engine exhaust passage from a reducing agent feed valve (15) within a predetermined range of period to remove NOx contained in an exhaust gas or to raise a temperature of an exhaust treatment device (13, 14), said control method comprising:
calculating a suitable injection interval (It) of the reducing agent corresponding to an operating state of the engine at the time of calculation with a predetermined fixed calculation period and updating an injection interval by using the calculated injection interval (It) as an updated new injection interval (It),
and executing a next injection of the reducing agent from the reducing agent feed valve (15) when an elapsed time (t) from when a previous injection was performed becomes the new injection interval (It) or more which was updated to by the calculating part (30) after the previous injection was performed,
wherein an injection amount of the reducing agent per unit time and an amount (W) of injection per injection are calculated with said predetermined fixed calculation period, and wherein said suitable injection interval (It) is found by dividing said amount (W) of injection per injection by said injection amount of the reducing agent per unit time.

4. The control method of an internal combustion engine as claimed in claim 3, wherein said predetermined fixed calculation period is shorter than said range of period of injection of the reducing agent from the reducing agent feed valve (15).

## Patentansprüche

1. Steuersystem einer Verbrennungskraftmaschine, in der ein Reduktionsmittel abwechselnd in einen Maschinen-Abgastrakt von einem Reduktionsmittelzuführventil (15) innerhalb eines vorgegebenen Periodenbereichs eingespritzt wird, um in dem Abgas enthaltenes NOₓ zu entfernen, oder um eine Temperatur einer Abgasnachbehandlungsvorrichtung (13, 14) zu erhöhen, wobei das Steuersystem ein Berechnungsteil (30), das ein geeignetes Einspritzintervall (It) des Reduktionsmittels entsprechend eines Betriebszustands der Maschine zu dem Zeitpunkt der Berechnung mit einem vorgegebenen festen Berechnungszeitraum berechnet, und das ein Einspritzintervall durch Verwendung des berechneten Einspritzintervalls (It) als ein aktualisiertes neues Einspritzintervall (It) aktualisiert, und ein Einspritzausführungsteil (30), das eine nächste Einspritzung des Reduktionsmittels von dem Reduktionsmittelzuführventil (15) ausführt, wenn eine verstrichene Zeit (t) ab dem Zeitpunkt, da eine vorherige Einspritzung durchgeführt wurde, dem neuen Einspritzintervall (It), das durch das Berechnungsteil (30) aktualisiert wurde, nachdem die vorherige Einspritzung durchgeführt wurde, entspricht oder darüber hinausgeht, aufweist, wobei eine Einspritzmenge des Reduktionsmittels pro Zeiteinheit und eine Einspritzmenge (W) pro Einspritzung mit der vorgegebenen festen Berechnungsperiode berechnet werden, und wobei das geeignete Einspritzintervall (It) ermittelt wird, indem die Einspritzmenge (W) pro Einspritzung durch die Einspritzmenge des Reduktionsmittels pro Zeiteinheit dividiert wird.

2. Steuersystem einer Verbrennungskraftmaschine nach Anspruch 1, wobei die vorgegebene feste Berechnungsperiode kürzer ist als der Periodenbereich der Einspritzung des Reduktionsmittels durch das Reduktionsmittelzuführventil (15).

3. Steuerverfahren einer Verbrennungskraftmaschine, bei dem ein Reduktionsmittel abwechselnd in einen Maschinen-Abgastrakt von einem Reduktionsmittelzuführventil (15) innerhalb eines vorgegebenen Periodenbereichs eingespritzt wird, um in dem Abgas enthaltenes NOx zu entfernen, oder um eine Temperatur einer Abgasnachbehandlungsvorrichtung (13, 14) zu erhöhen, wobei das Steuerverfahren aufweist:
Berechnen eines geeigneten Einspritzintervalls (It) des Reduktionsmittels entsprechend eines Betriebszustands der Maschine zu dem Zeitpunkt der Berechnung mit einem vorgegebenen festen Berechnungszeitraum, und Aktualisieren eines Einspritzintervalls durch Verwendung des berechneten Einspritzintervalls (It) als ein aktualisiertes neues Einspritzintervall (It),
und Ausführen einer nächsten Einspritzung des Reduktionsmittels von dem Reduktionsmittelzuführventil (15), wenn eine verstrichene Zeit (t) ab dem Zeitpunkt, da eine vorherige Einspritzung durchgeführt wurde, dem neuen Einspritzintervall (It), das durch das Berechnungsteil (30) aktualisiert wurde, nachdem die vorherige Einspritzung durchgeführt wurde, entspricht oder darüber hinausgeht,
wobei eine Einspritzmenge des Reduktionsmittels pro Zeiteinheit und eine Einspritzmenge (W) pro Einspritzung mit der vorgegebenen festen Berechnungsperiode berechnet werden, und wobei das geeignete Einspritzintervall (It) ermittelt wird, indem die Einspritzmenge (W) pro Einspritzung durch die Einspritzmenge des Reduktionsmittels pro Zeiteinheit dividiert wird.

4. Steuerverfahren einer Verbrennungskraftmaschine nach Anspruch 3, wobei der vorgegebene feste Berechnungszeitraum kürzer ist als der Periodenbereich der Einspritzung des Reduktionsmittels durch das Reduktionsmittelzuführventil (15).

## Revendications

1. Système de commande d'un moteur à combustion interne, dans lequel un agent réducteur est injecté par intermittence dans un passage d'échappement, depuis une soupape d'alimentation en agent réducteur (15), à l'intérieur d'une plage de période prédéterminée pour éliminer des NOₓ contenus dans un gaz d'échappement ou pour élever une température de dispositif de traitement des gaz d'échappement (13, 14), ledit système de commande comprenant une partie de calcul (30) qui calcule un intervalle approprié d'injection (It) de l'agent réducteur correspondant à un état de fonctionnement du moteur au moment du calcul, selon une période de calcul fixe prédéterminée et qui met à jour un intervalle d'injection à l'aide de l'intervalle d'injection calculé (It) en tant que nouvel intervalle d'injection mis à jour (It), et une partie d'exécution d'injection (30) qui exécute une injection suivante de l'agent réducteur depuis la soupape d'alimentation en agent réducteur (15), lorsqu'un temps écoulé (t) depuis l'instant où une précédente injection a été effectuée devient supérieur ou égal au nouvel intervalle d'injection (It) qui a été mis à jour par la partie de calcul (30) après que la précédente injection a été effectuée, dans lequel une quantité d'injection de l'agent réducteur par unité de temps et une quantité (W) d'injection par injection sont calculées selon ladite période de calcul fixe prédéterminée, et dans lequel ledit intervalle approprié d'injection (It) est déterminé par division de ladite quantité (W) d'injection par injection, par ladite quantité d'injection de l'agent réducteur par unité de temps.

2. Système de commande de moteur à combustion interne selon la revendication 1, dans lequel ladite période de calcul fixe prédéterminée est plus courte que ladite plage de période d'injection de l'agent réducteur depuis la soupape d'alimentation en agent réducteur (15).

3. Procédé de commande d'un moteur à combustion interne, dans lequel un agent réducteur est injecté par intermittence dans un passage d'échappement du moteur, depuis une soupape d'alimentation en agent réducteur (15), à l'intérieur d'une plage de période prédéterminée pour éliminer des NOₓ contenus dans un gaz d'échappement ou pour élever une température de dispositif de traitement des gaz d'échappement (13, 14), ledit procédé de commande comprenant les étapes consistant à :
calculer un intervalle approprié d'injection (It) de l'agent réducteur correspondant à un état de fonctionnement du moteur au moment du calcul, selon une période de calcul fixe prédéterminée et mettre à jour un intervalle d'injection à l'aide de l'intervalle d'injection calculé (It) en tant que nouvel intervalle d'injection mis à jour (It),
et exécuter une injection suivante de l'agent réducteur depuis la soupape d'alimentation en agent réducteur (15), lorsqu'un temps écoulé (t) depuis l'instant où une précédente injection a été effectuée devient supérieur ou égal au nouvel intervalle d'injection (It) qui a été mis à jour par la partie de calcul (30) après que la précédente injection a été effectuée,
dans lequel une quantité d'injection de l'agent réducteur par unité de temps et une quantité (W) d'injection par injection sont calculées selon ladite période de calcul fixe prédéterminée, et dans lequel ledit intervalle approprié d'injection (It) est déterminé par division de ladite quantité (W) d'injection par injection, par ladite quantité d'injection de l'agent réducteur par unité de temps.

4. Procédé de commande d'un moteur à combustion interne selon la revendication 3, dans lequel ladite période de calcul fixe prédéterminée est plus courte que ladite plage de période d'injection de l'agent réducteur depuis la soupape d'alimentation en agent réducteur (15).
